(19) Europäisches Patentamt
European Patent Office
Office européen des brevets

(11) **EP 2 256 673 B1**

(12) **EUROPÄISCHE PATENTSCHRIFT**

(45) Veröffentlichungstag und Bekanntmachung des Hinweises auf die Patenterteilung:
**06.11.2013 Patentblatt 2013/45**

(51) Int Cl.:
*G06K 19/077* (2006.01)  *H01Q 1/22* (2006.01)
*H01Q 7/00* (2006.01)

(21) Anmeldenummer: **09007225.7**

(22) Anmeldetag: **29.05.2009**

(54) **RFID-Transponder zur Montage auf Metall und Herstellungsverfahren für denselben**

RFID transponder for mounting on metal and production method for same

Transpondeur RFID destiné au montage sur métal et son procédé de fabrication

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(43) Veröffentlichungstag der Anmeldung:
**01.12.2010 Patentblatt 2010/48**

(73) Patentinhaber: **Fraunhofer-Gesellschaft zur Förderung der angewandten Forschung e.V.
80686 München (DE)**

(72) Erfinder:
• **Popugaev, Alexander
91052 Erlangen (DE)**

• **Wansch, Rainer
91083 Hagenau (DE)**
• **Bernhard, Josef
92507 Nabburg (DE)**
• **Pflaum, Alexander
91052 Erlangen (DE)**

(74) Vertreter: **Pfenning, Meinig & Partner GbR
Theresienhöhe 13
80339 München (DE)**

(56) Entgegenhaltungen:
**EP-A- 1 947 733    WO-A-2009/004666**

EP 2 256 673 B1

**Beschreibung**

Die vorliegende Erfindung bezieht sich auf einen RFID-Transponder sowie auf ein entsprechendes Herstellungsverfahren für einen RFID-Transponder. Der erfindungsgemäße RFID-Transponder wird dabei insbesondere so ausgebildet, dass er in einem der UHF(ultra high frequency)-Bänder 865-868 MHz (Europa), 902-928 MHz (Canada und USA) und 950-956 MHz (Japan) verwendet werden kann.

Gegenwärtig werden in vielen Bereichen, vor allem auch im Logistikbereich, sehr intensiv und nutzbringend RFID-Systeme eingesetzt. In vielen Fällen sind dabei sehr kompakte, flache RFID-Transponder (sog. Tags) notwendig.

Die meisten bekannten Konzepte für solche RFID-Transponder-Antennen (also Tag-Antennen), wie beispielsweise sog. PIFA-Antennen (engl. Printed Inverted F-Antennas) sind dabei nicht vollständig planar. Sie werden auf einer leitfähigen Klebefolie gefertigt und in mehreren Lagen gefaltet. Zudem ist ein solcher Aufbau ziemlich aufwändig und teuer, darüber hinaus ist eine entsprechende Struktur auch schlecht modifizierbar (beispielsweise wenn ein anderer Chip eingesetzt werden soll oder wenn der Tag auf einen anderen Frequenzbereich angepasst werden soll). Da ein solcher Aufbau auch nicht gut reproduzierbar ist, weisen solche RFID-Transponder oft lediglich geringe Reichweiten auf.

Das Dokument WO 2009/004666 A1 ist ein Beispiel des Stands der Technik.

Die Aufgabe der vorliegenden Erfindung ist es somit, einen kompakten, möglichst vollständig planaren und technisch gut reproduzierbaren RFID-Transponder zur Verfügung zu stellen, der (bei vorgegebenem Antennevolumen) eine möglichst hohe Reichweite und eine möglichst gute Leistungsanpassung erlaubt.

Diese Aufgabe wird durch einen RFID-Transponder gemäß Anspruch 1 sowie durch ein entsprechendes Herstellungsverfahren gemäß Anspruch 11 gelöst. Vorteilhafte Ausgestaltungsvarianten lassen sich dabei den jeweiligen abhängigen Ansprüchen entnehmen. Eine erfindungsgemäße Verwendung beschreibt Anspruch 13.

Nachfolgend wird die vorliegende Erfindung nun zunächst allgemein, dann anhand einzelner Ausführungsbeispiele beschrieben. Die in den vorteilhaften Ausführungsbeispielen in Kombination miteinander verwirklichten, vorteilhaften Einzelmerkmale der vorliegenden Erfindung müssen dabei im Rahmen der Erfindung (deren Schutzbereich durch die anhängenden Patentansprüche definiert ist) nicht in den in den Beispielen gezeigten speziellen Kombinationen verwirklicht sein, sondern können auch im Rahmen der vorliegenden Erfindung in anderen Kombinationen verwirklicht werden. Mit anderen Worten können die in den Beispielen in Kombination gezeigten, vorteilhaften Merkmale auch unabhängig voneinander realisiert werden.

Wie jeder RFID-Transponder weist der erfindungsgemäße RFID-Transponder eine Antenne und einen zumindest einen Sende- und Empfangsschaltkreis sowie einen Speicher umfassenden Chip, der elektrisch mit der Antenne verbunden ist, auf. Der erfindungsgemäße RFID-Transponder kann dabei, wie es dem Fachmann bekannt ist, als passiver, semi-passiver oder aktiver RFID-Transponder verwirklicht werden.

Ein wesentlicher Aspekt der vorliegenden Erfindung ist die Kombination aus einer Antenne und einem Anpassungsnetzwerk, das in die Antennenstruktur integriert ist. Das Anpassungsnetzwerk passt die Eingangsimpedanz der Antenne an die Impedanz des verwendeten Chips konjugiert komplex an. Bei der Antenne handelt es sich um eine mindestens eine Wicklung aufweisende Antenne, insbesondere kann vorteilhafterweise eine Schleifenantenne eingesetzt werden, die, wie dem Fachmann bekannt ist, aus einer (nahezu vollständig) geschlossenen elektrischen Leiterschleife besteht oder eine solche umfasst.

Der erfindungsgemäße RFID-Transponder umfasst somit die Antenne sowie einen zumindest einen Sende- und Empfangsschaltkreis sowie einen Speicher umfassenden Chip, der elektrisch mit der Antenne zum Durchführen der dem Fachmann bekannten Sende- und Empfangsvorgänge verbunden ist. Der erfindungsgemäße RFID-Transponder weist darüber hinaus ein dielektrisches Trägerelement auf, das auf einer ersten Oberfläche (nachfolgend alternativ auch als Oberseite bezeichnet) zumindest abschnittsweise mit einer strukturierten ersten Metallisierung (z.B. einer Metallschicht) bedeckt ist und das auf einer dieser ersten Oberfläche gegenüber liegenden, zweiten Oberfläche (nachfolgend alternativ auch als Unterseite bezeichnet) zumindest abschnittsweise mit einer zweiten Metallisierung (z.B. ebenfalls einer Metallschicht) bedeckt ist. Bei dem dielektrischen Trägerelement kann es sich um eine quaderförmige, flache Platte handeln (flach bedeutet in diesem Zusammenhang, dass die Höhe der Platte bzw. der Abstand zwischen der ersten Oberfläche und der zweiten Oberfläche deutlich kleiner ist, als die Ausdehnungen senkrecht hierzu bzw. als die Breite und/oder die Länge des dielektrisches Trägerelementes).

Durch elektrisch leitende Verbindung der ersten und der zweiten Metallisierung miteinander wird im Rahmen der vorliegenden Erfindung die Antenne des RFID-Transponders ausgebildet: Dies geschieht, wie nachfolgend noch näher beschrieben, beispielsweise durch Durchbrechungen im dielektrischen Trägerelement, die von der ersten Oberfläche zur zweiten Oberfläche verlaufen und die dann (beispielsweise galvanisch) mit einem leitfähigen Material (insbesondere Metall) gefüllt sind. Die gefüllten Durchbrechungen stellen dann eine leitfähige Verbindung zwischen der ersten und der zweiten Metallisierung her, so dass die Durchbrechungsfüllungen und die beiden Metallisierungen die Antenne ausbilden.

Die Strukturierung der ersten Metallisierung auf der ersten Oberfläche ist dabei so ausgebildet, dass (beispielsweise durch Vorsehen einer Aussparung und/oder Unterbrechung) auf der ersten Oberfläche zwei elektrisch voneinander isoliert, elektrisch leitfähige Anschlüsse ausgebildet sind, über die die Antenne elektrisch kontaktiert bzw. elektrisch mit dem Chip verbunden werden kann. Zum Durchführen einer solchen elektrischen Verbindung kann der Chip geeignet auf der ersten Oberfläche des dielektrischen Trägerelementes ausgerichtet und in der gewählten Position in elektrischem Kontakt mit den beiden Anschlüssen festgeklebt werden. Es ist auch möglich, in der ersten Oberfläche beispielsweise eine Vertiefung für den Chip vorzusehen, in die dieser dann eingelegt und in elektrischen Kontakt mit den beiden Anschlüssen gebracht werden kann.

Schließlich ist die erste, auf der ersten Oberfläche ausgebildete Metallisierung in der vorliegenden Erfindung weitergehend auch so strukturiert, dass sie zumindest einen Teil bzw. einen Abschnitt (beispielsweise einen Kapazitäts-Abschnitt) eines Anpassungsnetzwerkes ausbildet, mittels dessen die Eingangsimpedanz der Antenne konjugiert komplex an die Impedanz des Chips angepasst ist.

Bevorzugt weist dieses Anpassungsnetzwerk mindestens zwei Kapazitäten auf, wobei mindestens eine dieser Kapazitäten, in einem besonders bevorzugten Fall auch beide Kapazitäten, durch die Strukturierung der ersten Metallisierung auf der ersten Oberfläche ausgebildet ist/sind. Die durch Strukturierung der ersten Metallisierung ausgebildete (n) Kapazität(en) kann/können dabei als schlitzförmige, luftgefüllte (gegebenenfalls auch mit einem dielektrischen Material) gefüllte Auslassungen oder Unterbrechungen in der ersten Metallisierung ausgebildet sein. Solche Auslassungen bzw. Unterbrechungen können durch nachträgliche Bearbeitung einer die erste Oberfläche vollständig bedeckenden Metallschicht hergestellt werden, es ist jedoch auch möglich, die erste Metallisierung bereits beim Herstellen mit einer entsprechenden Struktur zu versehen. Besonders bevorzugt sind solche schlitzförmig ausgebildeten Kapazitäten (bzw. die Metallisierungsabschnitte bzw. deren sich gegenüberliegende, stirnseitige Enden beidseits eines solchen Schlitzes) parallel oder senkrecht zu einer Längsachse eines quaderförmig ausgebildeten dielektrischen Trägerelementes angeordnet.

In einer besonders bevorzugten Variante umfasst das Anpassungsnetzwerk eine erste Kapazität (nachfolgend auch als $C_{ser}$ bezeichnet), die in Reihe mit dem auf der ersten Oberfläche angeordneten Chip geschaltet ist, und eine zweite Kapazität (nachfolgend auch als $C_{shunt}$ bezeichnet), die dann parallel zu dieser Reihenschaltung aus Chip und erster Kapazität geschaltet ist. Diese Parallelschaltung ist dann mit den beiden Anschlüssen der Antenne bzw. mit der Antenne verbunden.

Wie nachfolgend noch im Detail beschrieben, kann eine der beiden Kapazitäten oder können beide Kapazitäten (insbesondere bei Ausbildung durch entsprechende Schlitze) als verteilte Kapazität(en) und/oder als Interdigitalkondensatoren ausgebildet sein. Unter einer verteilten Kapazität wird dabei eine Kapazität verstanden, die eine Ausdehnung (also eine Länge, Breite oder Höhe, insbesondere eine Länge, Breite und Höhe) aufweist, die größer ist als ein Viertel der Wellenlänge, an die der RFID-Transponder angepasst ist (also beispielsweise eine Wellenlänge entsprechend des UHF-Bandes 865-868 MHz). Insbesondere kann die Ausdehnung ein ganzzahliges Vielfaches dieser Viertelwellenlänge betragen. Unter einem Interdigitalkondensator wird ein Kondensator verstanden, der mehrere parallele, ineinander greifende Leiter umfasst.

Alternativ dazu ist es jedoch auch möglich, eine der Kapazitäten (oder auch beide der Kapazitäten) als konzentrierte Kapazität(en) auszubilden, wobei unter einer solchen Kapazität eine Kapazität verstanden wird, deren räumliche Abmessungen vernachlässigbar klein gegenüber der Betriebswellenlänge sind, die also eine Ausdehnung (siehe vorstehend) aufweist, die um mindestens den Faktor fünf, bevorzugt um mindestens den Faktor 10, bevorzugt um mindestens den Faktor 25 kleiner ist als ein Viertel der vorbezeichneten Wellenlänge. Bei einer solchen verteilten Kapazität kann es sich insbesondere um einen SMD-Kondensator handeln.

Wie nachfolgend noch detaillierter beschrieben wird, werden die Materialien und die Geometrien bei der vorliegenden Erfindung vorzugsweise so gewählt, dass gilt:

$$\frac{\lambda_0}{8\sqrt{\varepsilon_{r\_eff}}} \leq L \leq \frac{3\lambda_0}{4\sqrt{\varepsilon_{r\_eff}}}$$

wobei $\varepsilon_{r\_eff}$ die effektive Permittivität des Materials des dielektrischen Trägerelements und $L$ die Gesamtlänge der Antenne ist (die Gesamtlänge umfasst, beispielsweise bei einer Schleifenantenne, die Länge der beiden Metallisierungen in Längsrichtung des dielektrischen Trägerelementes sowie die Ausdehnung zweier in Längsrichtung gesehen an den jeweils gegenüber liegenden Enden ausgebildeter Durchführungen durch das dielektrische Trägerelement).

Die Wellenlänge λ auf der Mikrostreifenleitung ist um den Faktor $\sqrt{\varepsilon_{r-eff}} = c_0 / v_{ph} = \lambda_0 / \lambda$ gegenüber der Freiraumwellenlänge $\lambda_0$ verkürzt; $\varepsilon_{r-eff}$ ist kleiner als $\varepsilon_r$ des Substratmaterials, das sich das Feld nicht nur im Substrat, sondern teilweise auch in Luft befindet. Diese Definition der effektiven Permittivitätszahl $\varepsilon_{r-eff}$ bedeutet, dass sich die Welle auf der Leitung mit geschichtetem Dielektrikum mit der gleichen Phasengeschwindigkeit ausbreitete wie eine TEM-Welle in einem homogenen Dielektrikum mit der Permittivitätszahl $\varepsilon_{r\text{-}eff}$ (vgl. O. Zinke, H. Brunswig. Hochfrequenztechnik 1, Springer-Verlag, 6. Auflage, S. 159).

$\lambda_0$ ist dabei eine vorbestimmte Wellenlänge, bevorzugt eine Wellenlänge aus einem der drei vorgenannten UHF-Bänder.

Wie bereits beschrieben, kann die erste und die zweite Metallisierung über zwei mit einem elektrisch leitenden Material gefüllte Durchführungen, die von der Oberseite bis zur Unterseite des dielektrischen Trägerelementes verlaufen, elektrisch leitend verbunden sein. Alternativ dazu ist es jedoch auch möglich, zwei gegenüber liegende, senkrecht zur ersten und zur zweiten Oberfläche verlaufende Stirnseiten des dielektrisches Trägerelementes (bevorzugt die sich in Richtung der Längsachse eines quaderförmigen dielektrischen Trägerelementes gesehen gegenüber liegenden Stirnseiten) mit einer Metallisierung zu bedecken, die dann an beiden Enden des dielektrischen Trägerelementes die erste Metallisierung elektrisch mit der zweiten Metallisierung verbindet.

Besonders bevorzugt wird im Rahmen der vorliegenden Erfindung eine (durch die erste und zweite Metallisierung sowie deren elektrisch leitende Verbindungen) ausgebildete Schleifenantenne eingesetzt. Es ist jedoch grundsätzlich auch denkbar, auf entsprechende Art und Weise versetzt zueinander mehrere Wicklungen auf dem dielektrischen Trägerelement vorzusehen (durch geeignete Strukturierung der ersten sowie der zweiten Metallisierung) und an diese Wicklungen das Anpassungsnetzwerk und den Chip wie vorbeschrieben anzuschließen.

Die vorliegende Erfindung wird nun anhand von Ausführungsbeispielen im Detail beschrieben.

Dabei zeigt

Figur 1    eine schematische Darstellung eines RFID- Transponders gemäß der Erfindung mit einer Tag-Schleifenantenne und mit Anpassungsele- menten;

Figur 2    ein Ersatzschaltbild eines erfindungsgemä- ßen RFID-Transponders mit Anpassungselemen- ten;

Figur 3    einen erfindungsgemäßen RFID-Transponder mit einer konzentrierten Kapazität und einer verteilten Kapazität und einen weite- ren erfindungsgemäßen RFID-Transponder mit zwei verteilten Kapazitäten;

Figur 4    die Anpassung einer Schleifenantenne eines erfindungsgemäßen RFID-Transponders;

Figur 5    das Abbild eines erfindungsgemäßen RFID- Transponders;

Figur 6    den Verlauf des Reflexionskoeffizienten und den Verlauf des Antennengewinns bei einem erfindungsgemäßen RFID-Transponder;

Figur 7    Messergebnisse an einem erfindungsgemäßen RFID-Transponder im Vergleich zu anderen Transpondern aus dem Stand der Technik.

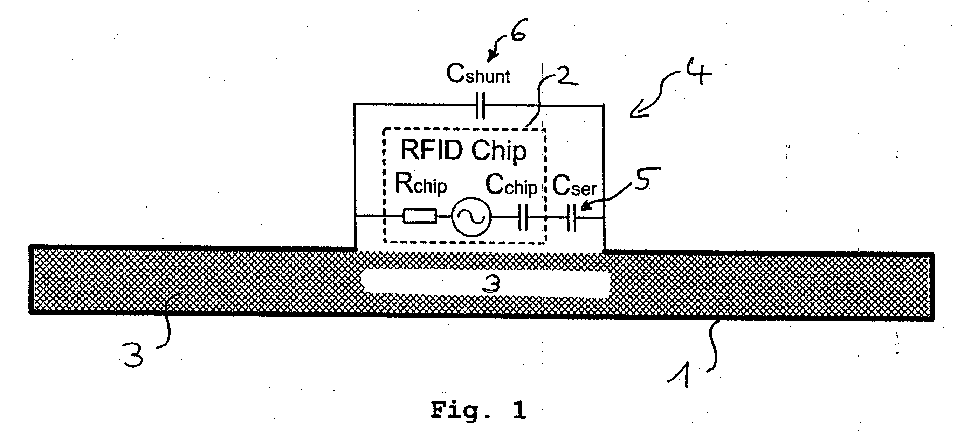

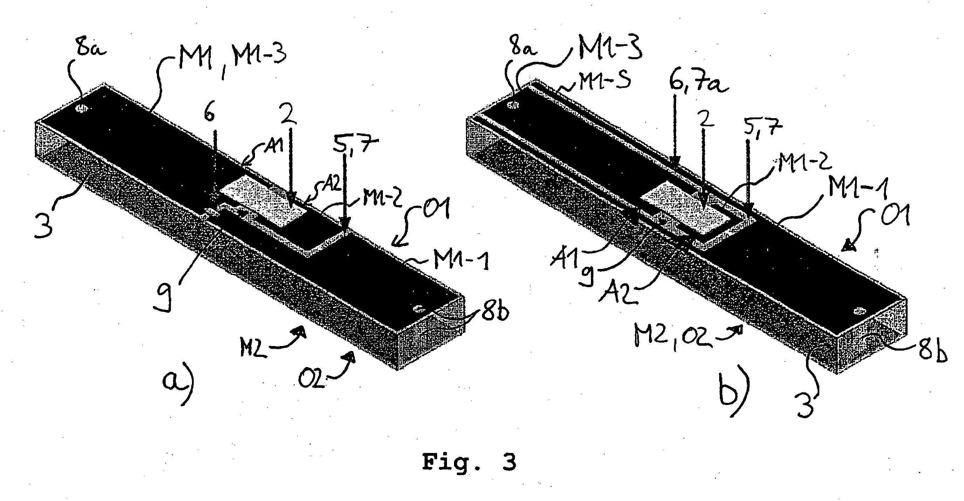

Figur 1 skizziert den grundsätzlichen Aufbau eines erfindungsgemäßen RFID-Transponders. Die erste sowie die zweite Metallisierung samt der elektrischen Kontakte zwischen diesen Elementen, die die Schleifenantenne ausbilden, sind hier nur schematisch gezeigt; ebenso das die Antenne 1 tragende dielektrische Trägerelement 3. Die durch zwei Metallisierungsenden der ersten Metallisierung auf der Oberseite des dielektrischen Trägerelementes ausgebildeten elektrischen Anschlüsse A1 A2 (vgl. Figur 3) sind mit einer Parallelschaltung bestehend aus dem Chip 2 sowie einer dazu in Reihe geschalteten ersten Kapazität 5 einerseits und einer zu dieser Reihenschaltung parallel geschalteten zweiten Kapazität 6 andererseits verbunden.

Wie in der Figur skizziert ist, kann der Chip 2 vereinfacht als eine Reihenschaltung eines ohmschen Widerstandes R, einer Spannungsquelle und einer Kapazität C angesehen werden.

Konkret wurde hier ein Alien-H3-Chip der Firma Alien Technology Corp., der zur Verwendung im Frequenzbereich von 860 bis 960 MHz ausgebildet ist, verwendet. Der Chip ist relativ niederohmig (Eingangswiderstand $R_{Chip}$ = 27 Ohm) und sehr kapazitiv (Eingangskapazität $C_{Chip}$ = 0,87 pF). Wie nachfolgend noch im Detail beschrieben wird, ist durch das gezeigte Anpassungsnetzwerk bei geeigneter Wahl dessen Parameter die Eingangsimpedanz der Antenne 1 an die Impedanz des Chips 2 konjugiert komplex angepasst, so dass ein maximaler Antennengewinn und somit eine maximale Reichweite erzielt werden.

Da die Schleifenantenne bei den vorgesehenen relativ kleinen Abmessungen (die Länge der Schleifenantenne bzw. die Länge des dielektrischen Trägerelementes in Längsachsrichtung (vgl. Figur 3) ist deutlich kürzer als die halbe Wellenlänge im oben genannten Frequenzbereich) eine induktive Impedanz aufweist, also die äußeren Abmessungen des RFID-Transponders begrenzt sind, ist die Antenne nicht lang genug, um die Kapazität des Chips zu kompensieren.

Daher wird die Antenne 1 mit den beiden Kapazitäten 5 und 6 wie vorbeschrieben konjugiert komplex angepasst.

Die Kapazität 6 (konzentrierte Kapazität) kann ein sog. SMD-Kondensator (von engl. surface mount device) sein, die Kapazität 5 kann als Schichtkapazität (interdigital) realisiert sein. Dies hat insbesondere den Vorteil, das der Tag dann vollständig planar und gut reproduzierbar ist. Eine Schichtkapazität bzw. eine Interdigitalkompensator umfasst dabei bevorzugt mehrere parallel ineinander greifende Leiterabschnitte.

Es ist im Rahmen der Erfindung auch möglich den Transponder breitbandig (für den Betrieb in mehreren oder in allen der Frequenzbänder 865 bis 868 MHz, 902 bis 928 MHz und 950 bis 956 MHz) anzupassen. Dafür wird dann nur die Kapazität $C_{shunt}$ ,nicht aber die Kapazität $C_{ser}$ , benötigt. In diesem Fall ist aber keine so gute Leistungsanpassung mehr möglich. Für einen so ausgebildeten Tag liegt der VSWR-Wert (Stehwellenverhältnis) zwischen 9 und 45.

Für einen Transponder mit den Abmessungen (ohne Gehäuse) 37 x 7 x 3,3 mm$^3$ sind folgende Ausführungen möglich: Reichweite [m] Europa/USA und Kanada/Japan:

■ 2,5/1,6/1,1
■ 2,0/2,0/1,3
■ 1,6/2,5/1,6.

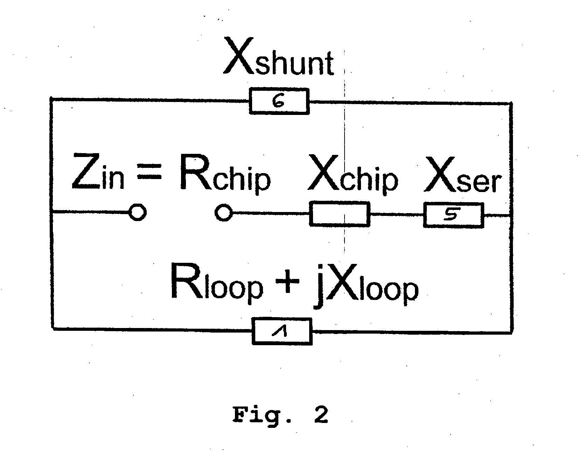

Dieses Anpassungsnetzwerk 4 ist im vorliegenden Fall somit aus den beiden gezeigten Kapazitäten 5, 6 in der gezeigten Verschaltung mit dem Chip 2 sowie der Antenne 1 gebildet (siehe auch Figur 2: Ersatzschaltbild).

Figur 3 zeigt nun zwei konkrete Ausführungsbeispiele für eine Realisierung des in Figur 1 gezeigten Aufbaus: Beide Ausführungsbeispiele verwenden ein quaderförmiges dielektrisches Trägerelement 3, dessen Höhe (Abstand zwischen der Oberseite O1 und der Unterseite 02 des gezeigten Trägerelementes) hier etwa 3 mm beträgt (übertrieben gezeichnet), dessen Breite hier etwa 7 mm beträgt und dessen Länge hier etwa 37 mm beträgt (Abmessungen ohne Gehäuse).

Auf der Oberseite O1 ist das dielektrische Trägerelement 3 mit einer strukturierten ersten Metallisierung M1 versehen. Auf der der Oberseite O1 gegenüber liegenden Unterseite 02 ist das dielektrische Trägerelement 3 mit einer zweiten Metallisierung M2 versehen, die hier nicht strukturiert ist und die Unterseite des dielektrischen Trägerelementes 3 vollständig bedeckt. In Längsrichtung gesehen nahe der beiden gegenüber liegenden Stirnseiten sind im Trägerelement 3 das Trägerelement 3 in Richtung von der Oberseite O1 zur Unterseite 02 gesehen vollständig durchbrechende Öffnungen (Durchbrechungen) vorhanden, die galvanisch mit einem Metall gefüllt wurden. Diese beiden Metallgefüllten Durchbrechungen 8a, 8b sind so ausgebildet, dass sie die erste Metallisierung M1 und die zweite Metallisierung M2 an den beiden gegenüber liegenden (in Längsachsrichtung gesehen) Enden elektrisch leitend miteinander verbinden. Die erste Metallisierung M1, die zweite Metallisierung M2 sowie die beiden Metall-gefüllten Durchbrechungen 8a, 8b bilden somit im vorliegenden Fall die Antenne 1. Die Durchbrechungen bzw. Durchkontaktierungen 8a, 8b sind möglichst dünn (induktiv) gewählt und möglichst nah zu den kurzen Kanten des Trägerelements 3 platziert (so das die Gesamtlänge der Schleife maximal ist).

Die auf der Oberseite O1 des Trägerelementes 3 ausgebildete erste Metallisierungsschicht M1 ist nun in dem in Figur 3a (links) gezeigten ersten Ausführungsbeispiel des erfindungsgemäßen RFID-Transponders so strukturiert, dass sie zwei elektrische Anschlüsse A1 und A2 ausbildet, mit denen der Chip 2 die Antenne 1 elektrisch kontaktiert und dass sie die erste, in Reihe mit dem Chip 2 geschaltete Kapazität $C_{ser}$ 5 ausbildet. Die Metallschicht M1 weist hierzu eine dünne, schlitzförmige Unterbrechung 7 auf: Im Bereich dieser elektrischen Unterbrechung ist somit die Metallschicht M1 vollständig von der Oberseite O1 des Trägerelementes 3 entfernt. Ein Abschnitt dieser schmalen, schlitzförmigen Unterbrechung 7 verläuft senkrecht zur Längsachsrichtung, also in Breitenrichtung auf der Oberfläche O1 und teilt, von der Durchbrechung 8b hin zur Durchbrechung 8a gesehen, die Metallisierung M1 in einen ersten Metallisierungsabschnitt M1-1 und einen zweiten, mittleren Metallisierungsabschnitt M1-2 auf.

In derselben Richtung gesehen findet sich dann eine weitere elektrische Unterbrechung 9, die Unterbrechung für den Chip 2, die etwa (in Längsachsrichtung gesehen) die dreifache Breite aufweist, wie die schlitzförmige Unterbrechung 7 zwischen dem ersten und dem zweiten Metallisierungsabschnitt M1-1 und M1-2 der ersten Metallisierung M1. Diese weitere, für den Chip 2 vorgesehene, breitere Unterbrechung 9 teilt somit die erste Metallisierung M1 ebenfalls in zwei Abschnitte und trennt den zweiten, mittleren Metallisierungsabschnitt M1-2 vom dritten Metallisierungsabschnitt M1-3, der dann elektrisch leitend mit der Durchführung 8a verbunden ist. Der erste Metallisierungsabschnitt M1-1 ist elektrisch leitend mit der Durchführung 8b verbunden. Die beiden Unterbrechungen 7, 9 teilen somit die Metallisierung M1 entlang der Längsrichtung in die drei elektrisch voneinander isolierten Abschnitt M1-1 bis M1-3.

Der Chip 2 ist so auf der ersten Oberfläche O1 angeordnet, dass der erste elektrische Chipanschluss elektrisch leitend mit dem dritten Metallisierungsabschnitt M1-3 verbunden ist und, jenseits der Chipunterbrechung 9, der zweite elektrische Chipanschluss elektrisch leitend mit dem zweiten, mittleren Metallisierungsabschnitt M1-2 verbunden ist. Der schmale, schlitzförmige Grabenabschnitt 7 zwischen dem zweiten Metallisierungsabschnitt M1-2 und dem ersten Metallisierungsabschnitt M1-1 bildet, senkrecht zur Längsrichtung des Trägerelementes 3 verlaufend, die erste Kapazität $C_{ser}$ 5 aus.

Durch geeignete Weiterführung des Grabens 7 zunächst parallel zur Längsachsrichtung (also in Richtung von der zweiten Durchbrechung 8b hin zu der ersten Unterbrechung 8a gesehen) und dann wieder senkrecht zur Längsachsrichtung des Trägerelementes 3 gesehen (so dass der schlitzförmige Grabenabschnitt 7 samt seiner Weiterführung zusammen mit der breiteren Chipunterbrechung die erste Metallisierung M1 in die drei vorbeschriebenen, elektrisch vollständig voneinander isolierten Oberflächenabschnitte M1-1 bis M1-3 aufteilt) ist im vorliegenden Fall parallel zur vorbeschriebenen Dreiteilung M1-1 bis M1-3 ein weiterer, schlitzförmiger Grabenabschnitt zwischen dem Metallisierungsabschnitt M1-3 und dem Metallisierungsabschnitt M1-1 realisiert, oberhalb dessen die zweite Kapazität $C_{shunt}$ 6 so angeordnet und elektrisch mit den beiden Metallisierungsabschnitten M1-3 und M1-1 verbunden ist, dass die in Figur 1 gezeigte Parallelschaltung realisiert ist.

Figur 3b zeigt ein zweites Ausführungsbeispiel für einen erfindungsgemäßen RFID-Transponder, das grundsätzlich ebenso wie das in Figur 3a gezeigte Ausführungsbeispiel realisiert ist. Nachfolgend werden daher nur die Unterschiede beschrieben.

Während beim in Figur 3a gezeigten Fall eine verteilte, erste Kapazität 5 und eine konzentrierte, zweite Kapazität 6 ausgebildet sind, ist beim in Figur 3b gezeigten Fall nicht nur die erste Kapazität 5 (mittels eines schlitzförmigen Grabenabschnitts) in verteilter Form ausgebildet, sondern auch die zweite Kapazität 6. Hierzu weist die erste Metallisierung M1 einen in Längsachsrichtung des Trägerelementes 3 verlaufenden, mit dem quer verlaufenden Grabenabschnitt 7 (der die erste Kapazität 5 ausbildet) verbundenen, weiteren schlitzförmigen Grabenabschnitt, der hier mit dem Bezugszeichen 7a versehen ist, auf. Dieser Grabenabschnitt 7a verläuft, in Längsachsrichtung gesehen, von der der zweiten Durchbrechung 8b zugewandten Seite des Chips über den Chip 2 hinweg bis hin zu der der ersten Durchbrechung 8a zugewandten Seite des Chips und darüber hinaus so, dass der erste Metallisierungsabschnitt M1-1 der ersten Metallisierung M1 am längsseitigen Rand des dielektrischen Trägerelementes (bzw. seitlich neben dem Chip 2) einen schmalen, stegförmigen Abschnitt M1-S aufweist, der, zusammen mit dem in Querrichtung gesehen gegenüber liegenden dritten Metallisierungsabschnitt M1-3 der ersten Metallisierung M1 die zweite Kapazität 6 ausbildet.

Im in Figur 3b gezeigten Fall ist die Strukturierung der Metallisierung M1 bzw. der drei Abschnitte derselben (M1-1 bis M1-3) somit mit Hilfe der schlitzförmigen Grabenabschnitte 7, 7a so ausgebildet, dass beide Kapazitäten 5, 6 als verteilte Kapazitäten realisiert sind.

Wie die Figur 3 zeigt, können die Kapazitäten 5, 6 sowohl mittels konzentrierter Bauelemente (also Bauelemente, deren Ausdehnung sehr klein im Vergleich zur Viertelwellenlänge ist), als auch mittels verteilter Elemente realisiert werden. Jede der beiden in Figur 3 vorgestellten Antennen 1 eines erfindungsgemäßen Transponders besteht aus einem dielektrischen Trägermaterial (HF-Substrat) 3, das beidseitig metallisiert ist.

Die Oberseite O1 des Trägerelementes 3 weist eine Unterbrechung 9 für den Chip 2 auf und ist galvanisch mit der unteren Seite mittels Durchkontaktierungen 8a, 8b verbunden. Die Anpassung der Antenne 1 in Figur 3a erfolgt durch kapazitive Kopplung (Kapazität 5) und einen Kondensator (Kapazität 6), der in die Leiterplatte bzw. die Metallisierungsschicht M1 eingebettet ist.

Je kürzer der RFID-Transponder ist, desto empfindlicher ist er bezüglich Streuungen der Kapazität des Kondensators 6 - daher ist die Reproduzierbarkeit im in Fig. 3a gezeigten Fall schwieriger wie im in Figur 3b gezeigten Fall: Die Antenne 1 der Ausführungsform von Figur 3b weist im Gegensatz zur Antenne 1 in Figur 3a keine konzentrierten Anpassungselemente auf: Durch die beiden Schlitze 7, 7a erfolgt eine technisch gut reproduzierbare Anpassung.

Die konkrete Größe der Kapazitäten 5, 6, die zur konjugiert komplexen Anpassung der Eingangsimpedanz der Antenne an die Impedanz des Chips notwendig sind, können wie folgt eingestellt werden:

Figur 2 zeigt zunächst das Ersatzschaltbild der in den Figuren 1 bzw. 3 gezeigten Anordnungen, das den folgenden Überlegungen zugrunde liegt (Eingangsimpedanz der Schaltung; Z ist die Impedanz, R ist der Wirkwiderstand und X ist der Blindwiderstand; "in" bezieht sich auf die Eingangsimpedanz der Schaltung, "shunt" auf die Kapazität 6, "chip" auf den Chip 2 und "loop" auf die vorbeschriebene Schleifenantenne 1).

Es folgt somit

$$Z_{in} = jX_{chip} + jX_{ser} + \frac{jX_{shunt}(R_{loop} + jX_{loop})}{jX_{shunt} + (R_{loop} + jX_{shunt})}$$

oder

$$Z_{in} = R_{in} + jX_{in}$$

mit

$$R_{in} = \frac{R_{loop} X_{shunt}^2}{R_{loop}^2 + (X_{loop} + X_{shunt})^2}$$

$$X_{in} = X_{chip} + X_{ser} + \frac{X_{shunt}(R_{loop}^2 + X_{loop}^2 + X_{loop} X_{shunt})}{R_{loop}^2 + (X_{loop} + X_{shunt})^2}$$

Die Bedingung der konjugiert komplexen Leistungsanpassung lautet:

$$\begin{cases} R_{in} = R_{chip} \\ X_{in} = 0 \end{cases}$$

Daraus ergibt sich

$$X_{shunt} = \frac{R_{chip} X_{loop} + \sqrt{R_{chip}^2 X_{loop}^2 + R_{chip}(R_{loop} - R_{chip})(R_{loop}^2 + X_{chip}^2)}}{R_{loop} - R_{chip}}$$

$$X_{ser} = -X_{chip} - X_{shunt} \frac{R_{loop}^2 + X_{loop}^2 + X_{loop} X_{shunt}}{R_{loop}^2 + (X_{loop} + X_{shunt})^2}$$

und somit

$$C_{shunt} = -\frac{1}{2\pi f_0 X_{shunt}}$$

und

$$C_{ser} = -\frac{1}{2\pi f_0 X_{ser}} .$$

Hierin ist $f_0$ die Resonanzfrequenz, also diejenige Frequenz, an die der RFID-Transponder angepasst ist.
Anhand der Kapazitätswerte der Kapazitäten 5, 6 können auch die Schlitze 7, 7a bezüglich ihrer Breite und Länge dimensioniert werden: Die Kapazität eines solchen Schlitzes ist proportional der Schlitzlänge und umgekehrt proportional der Schlitzbreite.

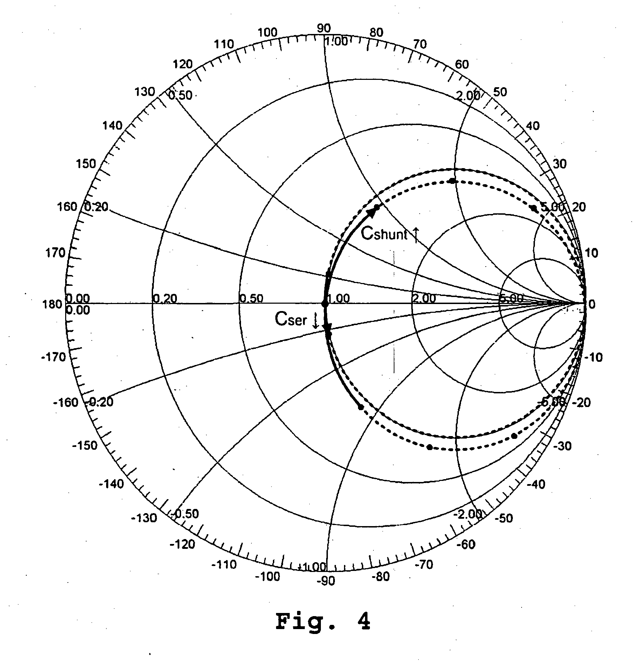

Die Figur 4 zeigt den Einfluss der Kapazitäten $C_{shunt}$ 6 und $C_{ser}$ 5 auf die Eingangsimpedanz der Antenne als Smith-Diagramm. Der Wirkwiderstand $R_{in}$ des gezeigten Anpassungsnetzwerkes 4 wird durch die Kapazität $C_{shunt}$ 6 bestimmt, die übrig gebliebene positive Reaktanz $X_{in}$ wird mit der Kapazität $C_{ser}$ 5 kompensiert.
Besonders bevorzugt ist zur Optimierung der Reichweite bei gleichzeitig guter Leistungsanpassung die folgende Bedingung zu erfüllen:

$$\frac{\lambda_0}{8\sqrt{\varepsilon_{r\_eff}}} \le L \le \frac{3\lambda_0}{4\sqrt{\varepsilon_{r\_eff}}}$$

Hierin ist L die Gesamtlänge der Antennenschleife 1, $\lambda_0$ ist die Wellenlänge bei der Resonanzfrequenz $f_0$ ($C=\lambda_0 * f_0$) und $\varepsilon_{r\_eff}$ ist die effektive Permitivität des Materials des dielektrischen Trägerelementes 3. Je kürzer die Gesamtlänge L der Schleifenantenne 1 ist, umso größer muss die Kapazität $C_{shunt}$ 6 sein und umso kleiner wird die Kapazität $C_{ser}$ 5. Die Breite und die Höhe der Schleifenantenne (also letztendlich die Ausgestaltung von Form und Größe der Metallisierungen M1, M2 und des Trägerelementes 3) bestimmen den Wirkungsgrad der Antenne 1. Je breiter die Schleifenantenne ist und je höher ihre Gesamtlänge L ist, desto effizienter ist die Schleifenantenne.

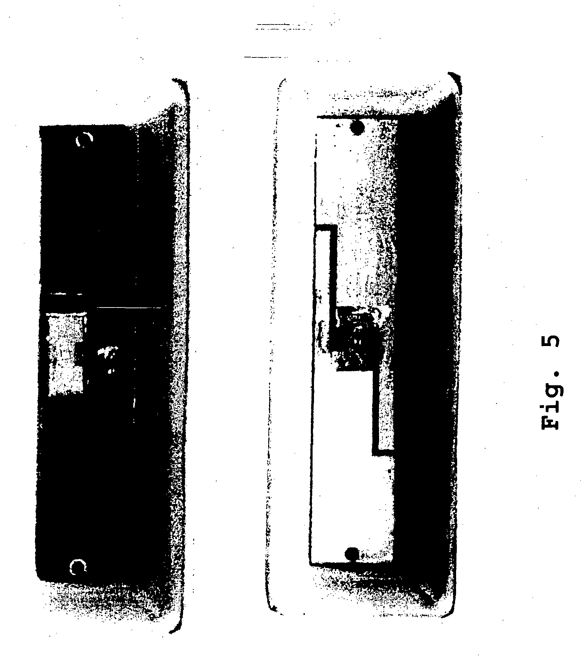

Figur 5 zeigt eine konkrete Ausführung eines erfindungsgemäßen RFID-Transponders für 865 bis 868 MHz in Europa. Der Chip 2 ist mit Hilfe eines leitfähigen Klebers, wie in Figur 3 gezeigt, auf die Antenne 1 aufgeklebt. Die Abmessungen ohne Gehäuse betragen im gezeigten Fall 37 x 7 x 3,3 mm$^3$. Mit Gehäuse betragen die Abmessungen 45 x 15 x 5 mm$^3$ (bei dem Substrat handelt es sich um ein Dielektrikum mit $\varepsilon_{r\_}$ = 3,38 und mit $\tan\delta$ = 0,0027; $\tan\delta$ ist der Verlustfaktor des Dielektrikums). Das Gehäuse ist aus Polycarbonat gefertigt.

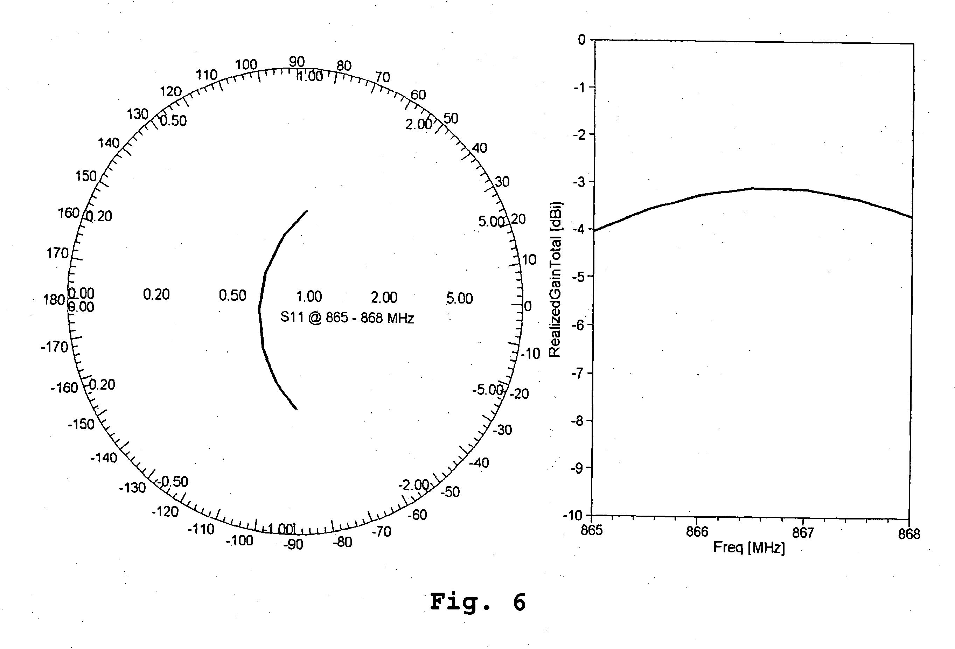

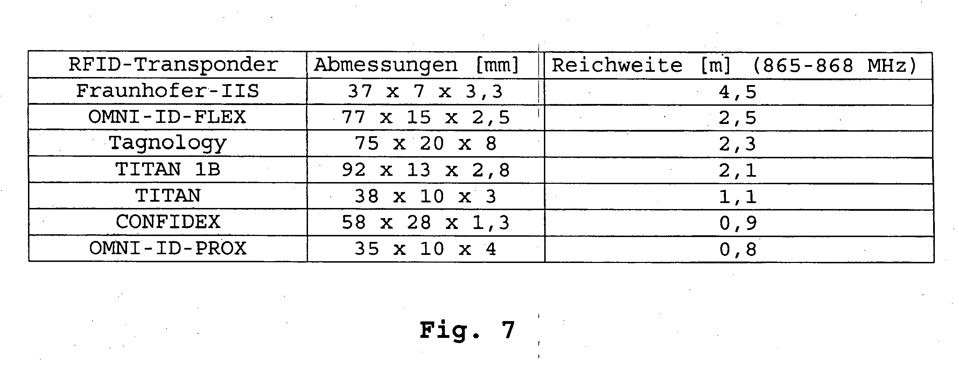

Figur 6 links zeigt den Reflexionskoeffizienten S11 des in Figur 5 gezeigten RFID-Transponders. Der Durchmesser der Impedanzkurve ist selbst bei einer relativen Bandbreite von etwa 0,3 % relativ groß und weist auf Schmalbandigkeit und Empfindlichkeit der erfindungsgemäßen Antenne 1 hin. Der Antennengewinn ist trotz eines geringen Wirkungsgrades von nur etwa 17 % etwa -3,5 dBi (vgl. Figur 6 rechts), was einer Reichweite von bis zu 5 m entspricht (bei 2 W Sendeleistung). Dies bestätigen auch die durchgeführten Messungen, deren Ergebnisse in Figur 7 zusammengefasst sind (erfindungsgemäßer RFID-Transponder in der zweiten Zeile im Vergleich zu anderen Transpondern aus dem Stand der Technik; Reader: Sirit, Ausgangsleistung: 27 dBm, Gewinn der Sendeantenne 6 dBi, Metallplatte: 250 x 1000 mm$^2$).

Die vorliegende Erfindung hat insbesondere den Vorteil eines vollständig planaren, relativ kleinen und kostengünstig zu realisierenden Aufbaus der Antenne 1 bzw. des RFID-Transponders. Der Transponder kann dabei besonders vorteilhaft zum Betrieb auf Metall verwendet werden; es ist jedoch auch möglich, den Transponder zum Betrieb auf nichtleitenden Oberflächen zu verwenden. Die Antenne 1 kann mit einer einfachen Topologie realisiert werden (rechteckige Anschlüsse A1, A2 und rechteckige Schlitze bzw. Kapazitäten). Der erfindungsgemäße RFID-Transponder lässt sich auf einfache Art und Weise auf das zu verwendende Frequenzband optimieren: Bei fixierten Außenmaßen (des Trägerelementes) müssen nur Schlitzlängen und - breiten justiert werden (siehe vorbeschriebene Rechnungen). Das gleiche gilt, wenn ein anderer Chip 2 eingesetzt werden soll oder wenn die Antenne 1 für einen anderen Frequenzbereich angepasst werden soll.

**Patentansprüche**

1. RFID-Transponder umfassend:

    eine Antenne (1),
    einen zumindest einen Sende- und Empfangsschaltkreis sowie einen Speicher umfassenden Chip (2),
    ein dielektrisches Trägerelement (3), das auf einer ersten Oberfläche (O1) zumindest abschnittsweise mit einer strukturierten ersten Metallisierung (M1) bedeckt ist und das auf einer der ersten Oberfläche gegenüber liegenden, zweiten Oberfläche (02) zumindest abschnittsweise mit einer zweiten Metallisierung (M2) bedeckt ist,
    wobei die erste und die zweite Metallisierung (M1, M2) miteinander elektrisch leitend und dadurch die Antenne (1) ausbildend verbunden sind, wobei die erste Metallisierung so strukturiert ist, dass sie zwei auf der ersten Oberfläche des dielektrischen Trägerelements angeordnete elektrische Anschlüsse (A1, A2) der Antenne ausbildet, und wobei der Chip über diese beiden Anschlüsse elektrisch kontaktierbar ist oder kontaktiert ist und auf der ersten Oberfläche und/oder zumindest abschnittsweise integriert in diese Oberfläche platzierbar ist oder angeordnet ist, und
    ein zumindest teilweise durch die Strukturierung der ersten Metallisierung ausgebildetes, die Eingangsimpedanz der Antenne konjugiert komplex an die Impedanz des Chips anpassendes Anpassungsnetzwerk (4), **dadurch gekennzeichnet, dass** das Anpassungsnetzwerk (4) eine erste Kapazität $C_{ser}$ (5), die mit dem Chip (2) in Reihe geschaltet ist, und eine zweite Kapazität $C_{shunt}$ (6), die parallel zu dieser Reihenschaltung aus Chip (2) und erster Kapazität $C_{ser}$ (5) geschaltet ist, aufweist.

2. RFID-Transponder nach dem vorhergehenden Anspruch,
    *dadurch gekennzeichnet, dass*

die zwei Kapazitäten (5,6) des Anpassungsnetzwerkes durch die Strukturierung der ersten Metallisierung ausgebildet sind.

**3.** RFID-Transponder nach dem vorhergehenden Anspruch,
*dadurch gekennzeichnet, dass*
die zwei durch die Strukturierung der ersten Metallisierung ausgebildeten Kapazitäten (5,6) durch eine schlitzförmige, bevorzugt parallel oder senkrecht zu einer Längsachse des quaderförmig ausgebildeten dielektrischen Trägerelements (3) verlaufende Auslassung oder Unterbrechung (7) in der ersten Metallisierung ausgebildet sind.

**4.** RFID-Transponder nach einem der vorhergehenden Ansprüche,
*dadurch gekennzeichnet, dass*
das Anpassungsnetzwerk (4) mindestens eine Kapazität, bevorzugt die zweite Kapazität $C_{shunt}$ (6), aufweist, die als Kapazität ausgebildet ist mit einer Länge, Breite und/oder Höhe, die um mindestens den Faktor fünf, bevorzugt um mindestens den Faktor zehn, bevorzugt um mindestens den Faktor 25 kleiner ist/sind, als ein Viertel der kleinsten Wellenlänge eines vorbestimmten Frequenzbandes, bevorzugt mindestens eines der drei ÜHF-Bänder 865 bis 868 MHz, 902 bis 928 MHz und 950 bis 956 MHz.

**5.** RFID-Transponder nach einem der vorhergehenden Ansprüche,
*dadurch gekennzeichnet, dass*
das Anpassungsnetzwerk (4) mindestens eine Kapazität, bevorzugt die erste Kapazität $C_{ser}$ (5) und/oder die zweite Kapazität $C_{shunt}$ (6), aufweist, die als Kapazität, insbesondere als Interdigitalkondensator, ausgebildet ist/sind mit einer Länge, Breite und/oder Höhe, die größer ist/sind oder die kleiner ist/sind, als ein Viertel der kleinsten Wellenlänge eines vorbestimmten Frequenzbandes, bevorzugt mindestens eines der drei UHF-Bänder 865 bis 868 MHz, 902 bis 928 MHz und 950 bis 956 MHz.

**6.** RFID-Transponder nach einem der vorhergehenden Ansprüche,
*dadurch gekennzeichnet, dass*
das dielektrische Trägerelement (3) und die Antenne (1) so ausgebildet sind, dass gilt

$$\frac{\lambda_0}{8\sqrt{\varepsilon_{r\_eff}}} \leq L \leq \frac{3\lambda_0}{4\sqrt{\varepsilon_{r\_eff}}}$$

mit $\varepsilon_{r\_eff}$ als effektiver Permittivität des Materials des dielektrischen Trägerelements (3), mit L als Gesamtlänge der Antenne (1) und mit $\lambda_0$ als einer vorbestimmten Wellenlänge, bevorzugt einer Wellenlänge aus einem der drei UHF-Bänder 865 bis 868 MHz, 902 bis 928 MHz oder 950 bis 956 MHz.

**7.** RFID-Transponder nach einem der vorhergehenden Ansprüche,
*dadurch gekennzeichnet, dass*
die erste und die zweite Metallisierung (M1, M2) über mindestens eine, bevorzugt über zwei mit einem elektrisch leitenden Material aufgefüllte, bevorzugt galvanisch aufgefüllte, Durchführung(en) (8) im dielektrischen Trägerelement und/oder über mindestens einen, bevorzugt über zwei außenseitig am dielektrischen Trägerelement geführte(n) Leitungsabschnitt(e) elektrisch leitend verbunden sind.

**8.** RFID-Transponder nach einem der vorhergehenden Ansprüche,
*dadurch gekennzeichnet, dass*
die Antenne (1) mindestens eine Wicklung oder Schleife, bevorzugt genau eine Wicklung oder Schleife umfasst, und/oder als Schleifenantenne ausgebildet ist.

**9.** RFID-Transponder nach einem der vorhergehenden Ansprüche,
*dadurch gekennzeichnet, dass*
das dielektrische Trägerelement (3) quaderförmig und/oder mit einem Abstand zwischen erster und zweiter Oberfläche von zwischen 2000 und 7000 μm, bevorzugt zwischen 2000 und 4000 μm, ausgebildet ist und/oder ein Leiterplattenmaterial enthält oder daraus besteht
und/oder
dass die erste und/oder die zweite Metallisierung das dielektrische Trägerelement mit einer Dicke von zwischen 10 und 100 μm, bevorzugt zwischen 18 und 35 μm, bedeckt/bedecken und/oder Cu und/oder Ag enthält/enthalten oder daraus besteht/bestehen.

10. RFID-Kommunikationssystem aufweisend einen RFID-Transponder nach einem der vorhergehenden Ansprüche und eine RFID-Leseeinheit,
**dadurch gekennzeichnet, dass**
mit der RFID-Leseeinheit ein elektromagnetisches Wechselfeld in mindestens einem der Frequenzintervalle 865 bis 868 MHz, 902 bis 928 MHz und/oder 950 bis 956 MHz erzeugbar ist und dass die Strukturierung, Anordnung und/oder Ausbildung der Antenne, des dielektrischen Trägerelements und/oder des Chips an dieses mindestens eine Frequenzintervall angepasst ist.

11. Herstellungsverfahren für einen RFID-Transponder umfassend:

das Vorsehen einer Antenne (1),
das Vorsehen eines zumindest einen Sende- und Empfangsschaltkreis sowie einen Speicher umfassenden Chips (2),
das zumindest abschnittsweise Bedecken einer ersten Oberfläche (O1) eines dielektrischen Trägerelements (3) mit einer ersten Metallisierung (M1) sowie das zumindest abschnittsweise Bedecken einer der ersten Oberfläche gegenüber liegenden, zweiten Oberfläche (02) des dielektrischen Trägerelements (3) mit einer zweiten Metallisierung (M2),
das elektrisch leitende miteinander Verbinden der ersten und der zweiten Metallisierung (M1, M2) und das dadurch Ausbilden der Antenne (1) und das Strukturieren der ersten Metallisierung so, dass sie zwei auf der ersten Oberfläche des dielektrischen Trägerelements angeordnete elektrische Anschlüsse (A1, A2) der Antenne ausbildet,
das elektrische Kontaktieren des Chips über diese beiden Anschlüsse und das Anordnen des Chips auf der ersten Oberfläche und/oder das zumindest abschnittsweise Integrieren des Chips in diese Oberfläche, und
das zumindest teilweise durch Strukturieren der ersten Metallisierung durchgeführte Ausbilden eines Anpassungsnetzwerks (4) so, dass die Eingangsimpedanz der Antenne konjugiert komplex an die Impedanz des Chips angepasst ist, **dadurch gekennzeichnet, dass** das Anpassungsnetzwerk (4) mit einer ersten Kapazität $C_{ser}$ (5), die mit dem Chip (2) in Reihe geschaltet wird, und einer zweiten Kapazität $C_{shunt}$ (6), die parallel zu dieser Reihenschaltung aus Chip (2) und erster Kapazität $C_{ser}$ (5) geschaltet wird, ausgebildet wird.

12. Herstellungsverfahren nach dem vorhergehenden Anspruch,
**dadurch gekennzeichnet, dass**
ein RFID-Transponder nach einem der vorhergehenden Ansprüche 1 bis 10 hergestellt wird.

13. Verwendung eines RFID-Transponders oder eines RFID-Kommunikationssystems nach einem der vorhergehenden Ansprüche im Warenlogistikbereich oder eines Herstellungsverfahrens nach einem der vorhergehenden Ansprüche zur Herstellung eines RFID-Transponders für den Warenlogistikbereich.

**Claims**

1. RFID transponder comprising:

an antenna (1),
a chip (2) comprising at least one transmission and reception circuit as well as a memory,
a dielectric carrier element (3), which is covered at least in sections on a first surface (O1) with a structured first metal layer (M1), and which is covered at least in sections on a second surface (02), which lies opposite the first surface, with a second metal layer (M2),
wherein the first and the second metal layer (M1, M2) are connected with one another electroconductively and therefore form the antenna (1), wherein the first metal layer is structured in such a way that it configures two electrical connections (A1, A2) of the antenna, which are arranged on the first surface of the dielectric carrier element, and wherein the chip can be or is contacted electrically via both of these connections and is integrated into this first surface and/or is able to be placed on in or arranged on this surface at least in sections, and
a matching network (4), which is configured at least partially by the structuring of the first metal layer and adjusts the input impedance of the antenna in a conjugate complex manner to the impedance of the chip, **characterised in that** the matching network (4) has a first capacitance $C_{ser}$ (5), which is connected in series with the chip (2), and a second capacitance $C_{shunt}$ (6), which is connected parallel to this series connection made from the chip (2) and the first capacitance $C_{ser}$ (5).

2. RFID transponder according to the preceding claim,
   *characterised in that*,
   the two capacitances (5, 6) of the matching network are configured by the structuring of the first metal layer.

3. RFID transponder according to the preceding claim,
   *characterised in that*,
   the two capacitances (5, 6), configured by the structuring of the first metal layer, are configured by a slot-shaped omission or interruption (7) in the first metal layer, which passes preferably parallel or perpendicular to a longitudinal axis of the rectangular dielectric carrier element (3).

4. RFID transponder according to one of the preceding claims,
   *characterised in that,*
   the matching network (4) has at least one capacitance, preferably the second capacitance $C_{shunt}$ (6), which is configured as a capacitance, having a length, width and/or height, which is/are at least a factor of five, preferably at least a factor of ten, preferably at least a factor of 25 times smaller than a quarter of the smallest wave length of a predetermined frequency band, preferably at least one of the three UHF bands 865 to 868 MHz, 902 to 928 MHz and 950 to 956 MHz.

5. RFID transponder according to one of the preceding claims,
   *characterised in that*,
   the matching network (4) has at least one capacitance, preferably the first capacitance $C_{ser}$ (5) and/or the second capacitance $C_{shunt}$ (6), that is/are configured as a capacitance, in particular as (a) interdigital capacitor(s), having a length, width and/or height that is/are greater or smaller than a quarter of the smallest wave length of a predetermined frequency band, preferably at least one of the three UHF bands 865 to 868 MHz, 902 to 928 MHz and 950 to 956 MHz.

6. RFID transponder according to one of the preceding claims,
   *characterised in that,*
   the dielectric carrier element (3) and the antenna (1) are configured in such away that

$$\frac{\lambda_0}{8\sqrt{\varepsilon_{r\_eff}}} \le L \le \frac{3\lambda_0}{4\sqrt{\varepsilon_{r\_eff}}}$$

applies, with $\varepsilon_{r\_eff}$ as effective permittivity of the material of the dielectric carrier element (3), with L as the total length of the antenna (1) and with $\lambda_0$ as a predetermined wave length, preferably a wave length from one of the three UHF bands 865 to 868 MHz, 902 to 928 MHz or 950 to 956 MHz.

7. RFID transponder according to one of the preceding claims,
   *characterised in that,*
   the first and the second metal layer (M1, M2) are electroconductively connected via at least one, preferably via two, line section(s) having a duct (8), which is filled with an electrically conductive material, preferably galvanically filled, in the dielectric carrier element and/or via at least one, preferably via two, line section(s) which lead(s) to the dielectric carrier element.

8. RFID transponder according to one of the preceding claims,
   *characterised in that,*
   the antenna (1) comprises at least one coil or loop, preferably precisely one coil or loop, and/or is configured as a loop antenna.

9. RFID transponder according to one of the preceding claims,
   *characterised in that*,
   the dielectric carrier element (3) is configured to be rectangular and/or with a distance between the first and second surface of between 2000 and 7000 $\mu$m, preferably between 2000 and 4000 $\mu$m, and/or contains a circuit board material or consists of it

and/or

that the first and/or the second metal layer cover(s) the dielectric carrier element with a thickness of between 10 and 100 $\mu$m, preferably between 18 and 35 $\mu$m, and/or contain(s) Cu and/or Ag or consist(s) of them.

10. RFID communication system having a RFID transponder according to one of the preceding claims and an RFID reading unit,
**characterised in that**,
an electromagnetic alternating field can be generated in at least one of the frequency intervals 865 to 868 MHz, 902 to 928 MHz and/or 950 to 956 MHz with the RFID reading unit, and that the structuring, arrangement and/or configuration of the antenna, of the dielectric carrier element and/or of the chip is adjusted to this at least one frequency interval.

11. Production method for an RFID transponder comprising:

the provision of an antenna (1),

the provision of a chip (2) comprising at least one transmission and reception circuit as well as a memory,

the at least sectional covering of a first surface (O1) of a dielectric carrier element (3) having a first metal layer as well as the at least sectional covering of a second surface (02), which lies opposite the first surface, of the dielectric carrier element (3) having a second metal layer (M2),

the electroconductive connection of the first and the second metal layer (M1, M2) to one another and the formation thereof of the antenna (1) and the structuring of the first metal layer such that it configures two electrical connections (A1, A2) of the antenna, which are arranged on the first surface of the dielectric carrier element,

the electrical contact of the chip via both of these connections and the arrangement of the chip on the first surface and/or the at least sectional integration of the chip into this surface, and

the formation of a matching network (4), at least partially carried out by the structuring of the first metal layer, such that the input impedance of the antenna is adjusted in a conjugate complex manner to the impedance of the chip, **characterised in that** the matching network (4) is configured with a capactiy $C_{ser}$ (5), which is connected in series with the chip (2), and a second capacitance $C_{shunt}$ (6), which is connected parallel to this series connection made from the chip (2) and the first capacitance $C_{ser}$ (5).

12. Production method according to the preceding claim,
**characterised in that**,
an RFID transponder according to one of the preceding claims 1 to 10 is produced.

13. Use of an RFID transponder or an RFID communication system according to one of the preceding claims in the goods logistics sector or the use of a production method according to one of the preceding claims for the production of a RFID transponder for the goods logistics sector.

**Revendications**

1. Transpondeur RFID comprenant :

une antenne (1),

une puce (2) comprenant au moins un circuit d'émission et de réception ainsi qu'une mémoire,

un élément de support diélectrique (3) qui est recouvert, sur une première surface (O1), au moins par sections d'une première métallisation (M1) structurée et qui, sur une deuxième surface (02) opposée à la première surface, est recouvert au moins par sections d'une deuxième métallisation (M2),

la première et la deuxième métallisation (M1, M2) étant mutuellement électriquement conductrices et étant reliées de manière à former l'antenne (1), la première métallisation étant structurée de manière à former, sur deux connecteurs électriques (A1, A2) de l'antenne, disposés sur la première surface de l'élément de support diélectrique, et la puce pouvant être connectée ou étant connectée électriquement via ces deux connecteurs et pouvant être placée ou étant disposée sur la première surface et/ou intégrée au moins par sections dans cette surface, et

un réseau d'adaptation (4) formé au moins partiellement par la structuration de la première métallisation, adaptant l'impédance d'entrée de l'antenne de manière conjuguée et complexe à l'impédance de la puce, **caractérisé en ce que** le réseau d'adaptation (4) présente une première capacité $C_{ser}$ (5), qui est branchée en série avec la puce (2), et une deuxième capacité $C_{shunt}$ (6) qui est branchée en parallèle par rapport à ce branchement en série de la puce (2) et de la première capacité $C_{ser}$ (5).

2. Transpondeur RFID selon la revendication précédente,
   **caractérisé en ce que**
   les deux capacités (5, 6) du réseau d'adaptation sont formées par la structuration de la première métallisation.

3. Transpondeur RFID selon la revendication précédente,
   **caractérisé en ce que**
   les deux capacités (5, 6) formées par la structuration de la première métallisation sont formées par un évidement ou une interruption (7) dans la première métallisation, en forme de fente, de préférence parallèle ou perpendiculaire à un axe longitudinal de l'élément de support diélectrique (3) de forme carrée.

4. Transpondeur RFID selon l'une quelconque des revendications précédentes,
   **caractérisé en ce que**
   le réseau d'adaptation (4) présente au moins une capacité, de préférence la deuxième capacité $C_{shunt}$ (6), qui est formée comme une capacité avec une longueur, une largeur et/ou une hauteur qui est(sont) inférieure(s) d'au moins le facteur cinq, de préférence d'au moins le facteur dix, de préférence d'au moins le facteur 25, à un quart de la plus petite longueur d'ondes d'une bande de fréquence prédéterminée, de préférence d'au moins une des trois bandes UHF de 865 à 868 MHz, de 902 à 928 MHz et de 950 à 956 MHz.

5. Transpondeur RFID selon l'une quelconque des revendications précédentes,
   **caractérisé en ce que**
   le réseau d'adaptation (4) présente au moins une capacité, de préférence la première capacité $C_{ser}$ (5) et/ou la deuxième capacité $C_{shunt}$ (6), qui est(sont) formée(s) comme une capacité, en particulier comme un condensateur interdigital avec une longueur, une largeur et/ou une hauteur qui est(sont) supérieure(s) ou qui est(sont) inférieure (s) à un quart de la plus petite longueur d'ondes d'une bande de fréquence prédéterminée, de préférence d'au moins une des trois bandes UHF de 865 à 868 MHz, de 902 à 928 MHz et de 950 à 956 MHz.

6. Transpondeur RFID selon l'une quelconque des revendications précédentes,
   **caractérisé en ce que**
   l'élément de support diélectrique (3) et l'antenne (1) sont formés de sorte que la formule

$$\frac{\lambda_0}{8\sqrt{\varepsilon_{r\_eff}}} \leq L \leq \frac{3\lambda_0}{4\sqrt{\varepsilon_{r\_eff}}}$$

soit valable, avec $\varepsilon_{r\_eff}$ étant la permittivité effective du matériau de l'élément de support diélectrique (3), avec L étant la longueur totale de l'antenne (1) et avec $\lambda_0$ étant une longueur d'onde prédéterminée, de préférence une longueur d'onde parmi l'une des trois bandes UHF de 865 à 868 MHz, de 902 à 928 MHz ou de 950 à 956 MHz.

7. Transpondeur RFID selon l'une quelconque des revendications précédentes,
   **caractérisé en ce que**
   la première et la deuxième métallisations (M1, M2) sont reliées de manière électriquement conductrices par l'intermédiaire d'au moins une, de préférence deux, passage(s) (8) dans l'élément de support diélectrique, remplis d'un matériau conducteur électrique, de préférence remplis galvaniquement, et/ou par l'intermédiaire d'au moins un, de préférence deux sections de lignes guidées à l'extérieur sur l'élément de support diélectrique.

8. Transpondeur RFID selon l'une quelconque des revendications précédentes,
   **caractérisé en ce que**
   l'antenne (1) comprend au moins un enroulement ou une boucle, de préférence exactement un enroulement ou une boucle, et/ou est formée comme une antenne à boucle.

9. Transpondeur RFID selon l'une quelconque des revendications précédentes,
   **caractérisé en ce que**

l'élément de support diélectrique (3) présente une forme carrée et/ou est formé avec une distance entre la première et la deuxième surface entre 2000 et 7000 μm, de préférence entre 2000 et 4000 μm et/ou comporte un matériau de carte de circuit imprimé ou se compose de celui-ci

et/ou

**en ce que** la première et/ou la deuxième métallisation recouvre(nt) l'élément de support diélectrique avec une épaisseur entre 10 et 100 μm, de préférence entre 18 et 35 μm, et/ou contient(nnent) du Cu et/ou de l'Ag ou se compose(ent) de ceux-ci.

10. Système de communication RFID présentant un transpondeur RFID selon l'une quelconque des revendications précédentes et une unité de lecture RFID,
**caractérisé en ce que**
avec une unité de lecture RFID, un champ électromagnétique alternatif peut être généré dans au moins une des plages de fréquences allant de 865 à 868 MHz, de 902 à 928 MHz et de 950 à 956 MHz et **en ce que** la structuration, la disposition et/ou la formation de l'antenne, de l'élément de support diélectrique et/ou de la puce est adaptée à cette au moins une plage de fréquences.

11. Procédé de fabrication d'un transpondeur RFID comprenant :

la prévision d'une antenne (1),
la prévision d'une puce (2) comprenant au moins un circuit d'émission et de réception ainsi qu'une mémoire,
le recouvrement au moins partiel d'une première surface (O1) d'un élément de support diélectrique (3) avec une première métallisation (M1) ainsi que le recouvrement au moins par sections d'une deuxième surface (02), opposée à la première surface, de l'élément de support diélectrique (3) avec une deuxième métallisation (M2), le raccordement électriquement conducteur mutuel de la première et de la deuxième métallisation (M1, M2) et donc la formation de l'antenne (1) et la structuration de la première métallisation de sorte qu'elle forme deux connecteurs électriques (A1, A2) de l'antenne disposés sur la première surface de l'élément de support diélectrique,
la connexion électrique de la puce par l'intermédiaire de ces deux connecteurs et la disposition de la puce sur la première surface et/ou l'intégration au moins par sections de la puce dans cette surface, et
la formation, effectuée au moins partiellement par la structuration de la première métallisation, d'un réseau d'adaptation (4) de sorte que l'impédance d'entrée de l'antenne est adaptée de manière conjuguée et complexe à l'impédance de la puce , **caractérisé en ce que** le réseau d'adaptation (4) est formé d'une première capacité $C_{ser}$ (5), qui est branchée en série avec la puce (2), et une deuxième capacité $C_{shunt}$ (6), qui est branchée en parallèle à ce branchement en série constituée de la puce (2) et de la première capacité $C_{ser}$ (5).

12. Procédé de fabrication selon la revendication précédente,
**caractérisé en ce que**
un transpondeur RFID est fabriqué selon l'une quelconque des revendications précédentes 1 à 10.

13. Utilisation d'un transpondeur RFID ou d'un système de communication RFID selon l'une quelconque des revendications précédentes dans le domaine de la logistique de marchandises ou d'un procédé de fabrication selon l'une quelconque des revendications précédentes destiné à la fabrication d'un transpondeur RFID pour le domaine de la logistique de marchandises.

RFID Chip

$C_{shunt}$

$R_{chip}$ $C_{chip}$ $C_{ser}$

6

2

4

5

1

3

**Fig. 1**

Fig. 2

Fig. 3

Fig. 4

Fig. 5

Fig. 6

| RFID-Transponder | Abmessungen [mm] | Reichweite [m] (865-868 MHz) |
| --- | --- | --- |
| Fraunhofer-IIS | 37 x 7 x 3,3 | 4,5 |
| OMNI-ID-FLEX | 77 x 15 x 2,5 | 2,5 |
| Tagnology | 75 x 20 x 8 | 2,3 |
| TITAN 1B | 92 x 13 x 2,8 | 2,1 |
| TITAN | 38 x 10 x 3 | 1,1 |
| CONFIDEX | 58 x 28 x 1,3 | 0,9 |
| OMNI-ID-PROX | 35 x 10 x 4 | 0,8 |

**Fig. 7**

EP 2 256 673 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009004666 A1